# EUROPEAN PATENT APPLICATION

(11) **EP 4 335 831 A1**
(43) Date of publication of application: **13.03.2024**
(21) Application number: 22290051.6
(22) Date of filing: 07.09.2022
(51) Int. Cl.: C04B 28/02, C04B 28/04, B28B 1/00, B33Y 10/00, B33Y 70/00

(54) **METHOD OF PLACING A FLOWABLE CONSTRUCTION MATERIAL**

(71) Applicant: Holcim Technology Ltd, 6300 Zug (CH)
(72) Inventor: Zhang, Qing, F-69003 Lyon (FR); Regnault De La Mothe, Loic, F-38540 Heyrieux (FR); Reboussin, Sandrine, F-69008 Lyon (FR); Lombois-Burger, Hélène, F-69003 Lyon (FR)
(74) Representative: Keschmann, Marc

(57) **Abstract**

A method of placing a flowable construction material comprising a hydraulic cement and aggregates for building structural and architectural components layer-by-layer, such as for 3D concrete or mortar printing, said method comprising:
conveying the flowable construction material to a deposition head,
placing the construction material through an outlet of the deposition head while moving the deposition head, in order to form a layer of construction material,
wherein successive layers of construction material are placed on top of each other,
wherein the aggregates comprise recycled concrete aggregates.

## Description

The invention refers to a method of placing a flowable construction material comprising a hydraulic cement and aggregates for building structural and architectural components layer-by-layer, such as for 3D concrete or mortar printing.

3D printing is a building technique that is commonly called "additive manufacturing" and consists of joining material to produce objects, layer upon layer, from 3D model data or other electronic data source. In particular, successive layers of material are formed under computer control by means of an industrial robot. It has already been proposed to develop 3D printers capable of producing structural buildings and infrastructure elements from a construction material that can be a mortar or a concrete. According to these proposals, the construction material is extruded through a nozzle to build structural components layer-by-layer without the use of formwork or any subsequent vibration. The possibility to build structures without formwork is a major advantage in terms of production rate, architectural freedom, material savings, and cost reduction.

Usually, 3D printing of construction materials is a continuous process that comprises conveying fresh concrete, mortar or micro-mortar to a deposition head and placing the construction material through an outlet of the deposition head in order to form a layer of concrete. While placing the concrete, the mortar or the micro-mortar, the deposition head is moved under computer control in order to create a layer of construction material in accordance with the underlying 3D model. In particular, the deposition head places a ribbon of fresh concrete or mortar material. For allowing the fresh concrete or mortar to be moved smoothly through each part of the delivery process to the deposition head, a consistent rheology of the fresh material must be safeguarded.

However, the construction material must not only be sufficiently fluid for conveying and extrusion purposes, but also sufficiently firm in order to provide the required mechanical stability of the 3D printed structure before the hydraulic binder sets. In particular, the lower layers of the construction material should sustain the load imposed by upper layers without collapsing or deforming.

Therefore, a flowable construction material adapted for 3D printing typically contains an accelerator in order to reduce the initial setting time. However, a binder having a short initial setting time will increase the risk that material builds up in the mixing devices, pumps, and in the printing head.

3d printed elements also require a strong bonding strength between the deposited layers, to ensure an adequate overall strength of the 3d printed structure. For this purpose, it is beneficial to place a layer while the preceding layer is still fresh. However, with a hydraulic binder having a short initial setting time the operational flexibility is very limited.

From the point of view of operational flexibility, it would be desirable to have a flowable construction material that has a long initial setting time, i.e. a constant consistency that does not increase too much with time, because this would allow to have more time for adjustments of the printing process, such as for changing printing parameters during the construction.

To accommodate some of the above requirements, it has been proposed to add a thickening agent and/or an accelerator to the flowable construction so as to increase the yield stress of the freshly placed material or reduce its setting times. Starch ether, celluloses ether, water soluble polyacrylamide, casein, and/or welan gum have been suggested to be used as the rheology modifying agent, and several accelerators have been tested, such as aluminum sulfate salts or sodium silicates.

However, adding additives, in particular an accelerator and/or a thickening agent, complicates the production process and adds to the costs of the construction material. Therefore, the instant invention aims at improving a method of 3D concrete or mortar printing that reduces or eliminates the need of adding an accelerator and/or a thickening agent to the construction material.

Another challenge in concrete technology is to reduce the environmental footprint of concrete and to minimize the exploitation of natural resources. Therefore, the instant invention also aims at reducing the environmental footprint of 3D concrete or mortar printing.

In order to solve these objectives, the invention according to a first aspect thereof provides a method of placing a flowable construction material comprising a hydraulic cement and aggregates for building structural and architectural components layer-by-layer, such as for 3D concrete or mortar printing, said method comprising:
conveying the flowable construction material to a deposition head,
placing the construction material through an outlet of the deposition head while moving the deposition head, in order to form a layer of construction material,
wherein successive layers of construction material are placed on top of each other,
wherein the aggregates comprise recycled concrete aggregates.

Thus, the invention is based on the idea to at least partly substitute naturally sourced aggregates with recycled concrete aggregates.

As used herein, the term aggregates covers sand, gravel, and coarse aggregates.

Recycled concrete aggregates, due to their porous structure, have a high water absorption and often further comprise reactive clinker particles from the cement paste in which they were encased. These often negatively affect the fresh properties of concrete, including a reduction of slump, and faster slump loss over time. Those are considered as negative effects for applications where fresh concrete flow is important.

However, this negative effect has been found to be beneficial for 3D printing of concrete, as it was found that the use of recycled aggregates in concrete for 3D printing results in a reduction of slump and a fast slump loss. This translates into improved printability and buildability.

By incorporating recycled aggregates in concrete or mortar for 3D printing, the following benefits have been observed:
- reducing or eliminating the need to use a thickening agent and/or an accelerator. This reduces the costs of concrete for 3D printing and simplifies the production processes,
- reducing the environmental footprint of concrete for 3D printing, by incorporating waste materials instead of aggregates extracted from a quarry.

Recycled concrete aggregates are produced from concrete demolition waste by crushing the waste material, separating foreign material such as rebar, and classifying the crushed material into various fractions having a desired particle size. Recycled concrete aggregates may be characterized by their composition or other properties, as defined in European Standard EN 933-11:2009.

In a preferred embodiment, the recycled aggregates or gravel of the present invention are preferably characterized by the following parameters:
- Rc+Ru: 70% - 100%, preferably 90% - 100%,
- X+Rg: 0% - 2%, preferably 0 - 1%,
- Ra: 0% - 10%, preferably 0 - 1%,
- Rb: 0% - 10%, preferably 0 - 1%,
- FL: 0%-2%,
where Ru (unbound stone), Ra, Rb, X, Rg, Rc (crushed concrete) and FL are as defined in EN 933-11:2009, and where the percentages are expressed as a weight percentages of the total amount of recycled aggregates.

The substitution rate of recycled aggregates to naturally occurring concrete aggregates can preferably vary from 10 wt.-% to up to 50 wt.-% of the total weight of aggregates used in the construction material. Preferably, the substitution rate of recycled aggregates to naturally occurring concrete aggregates is selected to be 10-20 wt.-% or 10-30 wt.-% or 10-40 wt.-%, of the total weight of aggregates used in the construction material.

The amount of recycled concrete aggregates present in the construction material is preferably selected such that a layer of placed material has sufficient stability in order not to collapse under its own weight or the weight of subsequent layer(s) placed on top. In this connection, a preferred mode of operation consists in that, after the placement of a first layer of construction material, at least one subsequent layer of construction material is placed onto the first layer, wherein the amount of recycled concrete aggregates is selected so as to attain a yield stress so that the first layer does not collapse under the load of said at least one subsequent layer.

In this connection, "not collapsing" means that the height of the layer is not reduced by more than 10%, preferably more than 5%, under the load of the at least one subsequent layer.

According to a preferred mode of operation, construction material of the first layer is allowed to rest during a time period of not more than 2 minutes, preferably during a time period of 30-60 sec, before construction material of a subsequent layer is placed onto the said construction material of the first layer.

According to a preferred embodiment of the invention, the yield stress of the freshly placed construction material is 300 - 3000 Pa, measured 30 sec. after its placement. Therefore, it is preferably proceeded such that the amount of recycled concrete aggregates present in the construction material is selected so as to provide a yield stress of 300 - 3000 Pa. The yield stress is measured with a scissometer. A scissometer consists of a vane plunged into the material to be tested and to which an increasing torque is applied. When a failure occurs in the material, the vane starts to rotate, generally as the torque reaches its maximum value, which is considered as the characteristic value that is representative of the yield stress of the material. The yield stress measurement is preferably carried out within 30-60 sec after the material has been placed.

Aggregates used in a construction material that is based on a hydraulic binder may be present in the form of natural sand and/or natural gravel. Sand is usually defined as aggregate having a particle size of 0-4mm, and gravel is defined as aggregate having a particle size of 4-10mm. Aggregates can have a size of up to 20mm or 32mm. The particle sizes of aggregates is measured by sieving.

With the invention, either natural sand or natural gravel, or both, may at least partly be substituted by the respective fraction of recycled concrete aggregates. Aggregates between 10mm and 20mm may also be partly substituted by the respective fraction of recycled concrete aggregates.

According to a preferred embodiment of the invention, recycled concrete aggregates comprise a fine fraction having a particle size of < 4mm and/or a coarse fraction having a particle size of 4-20mm, preferentially 4-10mm, measured by sieving.

As mentioned before, the beneficial effects of using recycled concrete aggregates is at least partly due to their porous structure. The porosity of the recycled concrete aggregates may, e.g. be characterized by their water absorption and/or their density.

According to a preferred embodiment, the recycled concrete aggregates may have a water absorption of 5-20%, preferably 10-20%, measured according to NF EN 1097-6, dated 2022.

According to a preferred embodiment, the recycled concrete aggregates may have particle density of 1.7-2.7 kg/dm³.

Preferably, the recycled concrete aggregates may have a packing density of 0.48-0.65, measured according to NF EN 1097-3, dated 1998. Such a loose packing density allows having reasonable volume of paste, i.e. reasonable dosage of binder and additives. This is beneficial for reducing the environmental impact of the mortar/concrete, and reducing the cost.

As mentioned before, the invention allows to minimize or even eliminate the use of a thickening agent. Therefore, in a preferred embodiment, the concrete or mortar used in the present invention allows to reduce the amount of thickening agent and/or accelerator by 50 wt.-% compared to the same concrete or mortar which contains only aggregates extracted from a quarry. In an even more preferential embodiment, the construction material does not contain any thickening agent and/or accelerator.

As used herein, a thickening agent is understood to refer to a viscosity modifying admixture as defined in European Standard EN-934-2 of August 2012, which is an admixture that limits segregation in fresh concrete or mortar, i.e. the separation of the concrete constituents as a function of their respective densities and weight, by improving cohesion. Examples of thickening agents include starch ether, celluloses ether, water soluble polyacrylamide, casein, a suspension of colloidal silica, or a liquid alkali swellable emulsions of polymers (ASE, HASE), and/or welan gum.

As also mentioned before, the invention allows to minimize or even eliminate the use of an accelerator. Therefore, a preferred embodiment provides that the construction material does not contain any accelerator.

Alternatively, an accelerator may be added to or be present in the construction material. According to a preferred embodiment, an accelerator is added to the construction material in the deposition head, i.e. after the step of conveying the flowable construction material to the deposition head and before the step of placing the construction material through an outlet of the deposition head.

An accelerator is understood to refer to a set accelerating admixture or a hardening accelerator as defined in European Standard EN-934-2 of August 2012. Examples of accelerators include calcium nitrate, calcium nitrite, calcium formate, calcium chloride, aluminum salts, sodium silicates, and thiocyanate salts.

The construction material may be a cement mortar or a cement micro-mortar, i.e. a mixture of a hydraulic cement, potentially additional mineral components such as ground limestone, water, sand, and chemical admixtures.

The construction material may also be a concrete, i.e. a mixture of a hydraulic cement, potentially additional mineral components such as ground limestone, water, sand, gravel, and chemical admixtures.

In a preferred embodiment, the construction material is a flowable ultrahigh performance concrete, i.e. a mixture of cement, fine limestone material, micro-sand and/or sand, a high-range water reducing admixture, potentially an accelerating admixture, and water, that develops a compressive strength at 28 days of at least 100 MPa.

Preferably, the step of placing the construction material comprises extruding the construction material in a pasty form through a nozzle of the deposition head.

The conveying step of the inventive method comprises conveying the construction material in a flowable state to the deposition head. In particular, the conveying of the construction material is performed by pumping. Preferably, the material is conveyed in a wet state and is ready to be placed without the need of adding any additional components.

Preferably, the fresh construction material, such as fresh concrete or fresh mortar, is stored in a silo or any other storage container or in a mixer of a ready-mix delivery truck and is conveyed from the storage site directly to the deposition head.

In order to achieve the conveyability or pumpability described above, a water reducer, in particular a plasticizer or a super-plasticizer, preferably a plasticizer based on polyoxy polycarboxylate or phosphonates, is preferably added to or is present in the construction material before the conveying step. Preferably, the flowable construction material contains both, a phosphonate-based superplasticizer and a polycarboxylate-based superplasticizer.

A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate and sulfanilic acid as described in the Concrete Admixtures Handbook, Properties Science and Technology, V.S. Ramachandran, Noyes Publications, 1984.

Super-plasticisers belong to a new class of water reducers and are capable of reducing water contents of mixing water, for a given workability, by approximately 30% by mass. By way of example of a superplasticizer, the PCP super-plasticisers may be noted. The term "PCP" or "polyoxy polycarboxylate" is to be understood according to the present invention as a copolymer of acrylic acids or methacrylic acids and their esters of polyoxyethylene (POE).

Preferably, the construction material comprises 0.4-1 wt.-%, more preferably 0.45-0.75 wt.-%, of one or more water reducer(s), plasticizer(s) or superplasticizer(s), based on the total weight of the hydraulic cement. If more than one type of water reducer, plasticiser or superplasticizer is used, the amount of 0.4-1 wt.-%, preferably 0.45-0.75 wt.-%, refers to the total amount of all such constituents based on the total weight of the hydraulic cement.

The flowable construction material contains a hydraulic cement, which is a hydraulic binder comprising at least 50 wt.-% of CaO and SiO₂ that sets due to a chemical hydration reaction between the dry ingredients and water. The hydraulic cement may contain other components in addition to CaO and SiO₂. Various mineral additions, such as, e.g., silica fume, granulated blast-furnace slag (gbfs), fly ash, natural pozzolans, calcined clays, ground limestone or concrete demolition waste, may be added to Portland cement, in order to obtain Portland composite cements. The mineral additions, typically between 10 and 50 wt.-% of the total weight of the hydraulic cement, are in most applications ground granulated blast furnace slag, fly ash, pozzolans, ground limestone or mixtures thereof. The addition of silica fume can be of particular benefit for the production of high strength 3d printed mortar or concrete, i.e. having a compressive strength at 28 days of at least 70 MPa.

Preferably, the hydraulic cement is composed of Portland cement clinker mixed with any one or several of the main and minor constituents described in the cement standard EN 197-1 of April 2012, and calcium sulfate. The hydraulic cement may also comprise fine ground particles of concrete demolition waste, or ground slags that are not produced by blast furnaces.

Preferably, the hydraulic cement comprises at least 30 wt.-% Portland cement clinker.

Preferably, the hydraulic cement comprises at least 10 wt.-% of a supplementary cementitious material, preferably ground granulated blast-furnace slag.

Suitable cements are the cements described in the European NF EN 197-1 Standard of April 2012 or mixtures thereof, preferably cement of the types CEM I, CEM II, CEM III, CEM IV or CEM V.

The hydraulic cement may also be a fine or an ultrafine cement, i.e. a hydraulic cement that is ground to a higher fineness than standard hydraulic cements. The fineness can for example be higher that 5000 cm²/g and reach values up to 13000 cm²/g or even 15000 cm²/g (expressed as cement Blaine fineness).

According to a preferred embodiment, the flowable construction material does not contain any aluminate cement, such as calcium aluminate cement. Alternatively, aluminate cement such as calcium aluminate cement or a calcium sulfoaluminate cement, may be present in an amount of < 5 % by weight, preferably < 2.0 % by weight, based on the total amount of hydraulic cement.

According to a preferred embodiment, the hydraulic cement comprises Portland cement and an aluminate cement, wherein the aluminate cement is present in an amount of < 5 % by weight, preferably in an amount of < 2 % by weight, based on the total amount of hydraulic cement.

Calcium aluminate cements are cements consisting predominantly of hydraulic calcium aluminates. Alternative names are "aluminous cement", "high-alumina cement" and "Ciment fondu" in French. Calcium aluminate cements have a short initial setting time, so that they are considered less preferred. A hydraulic cement having a short initial setting time will increase the risk that material builds up in the deposition head. Further, a short initial setting time may reduce the bonding strength between the layers placed on above the other, because the preceding layer may not be fresh any more when a subsequent layer is placed. Limiting the content of calcium aluminate cement is also preferred in terms of costs, since calcium aluminate cement is relatively expensive.

Further, the flowable construction material may contain a mineral filler, such as limestone. The addition of a fine fraction of a mineral filler can be of particular benefit for the production of high strength 3d printed mortar or concrete. Preferably, the mineral filler, such as limestone, has a particle size of < 50 µm, preferably < 40 µm. More preferably, the mineral filler, such as limestone, comprises a fine fraction having a particle size distribution characterized by a D50 of 3-5 µm and a D90 of 8-12 µm and a coarse fraction having a particle size distribution characterized by a D50 of 10-12 µm and a D90 of 35-40 µm.

Further, the aggregates present in the flowable construction material may comprise a microsand having a particle size of < 1 mm), a second sand having a particle size of 1-4 mm) and optionally coarse aggregates ( > 4 mm and < 32 mm).

The flowable construction material may contain metal fibers and/or organic fibers and/or glass fibers. The quantity by volume of fibers is generally from 0.5 to 8% relative to the total volume of the fresh concrete composition. The quantity of metal fibers, expressed in terms of volume of the final hardened concrete is generally less than 3%, for example from 0.5 to 2.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (l) of the metal fibers is generally at least 2 mm and is preferably 10 to 30 mm. The ratio l/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, fibers of homo- or copolymers, polyamide or polyimide fibers. Mixtures of these fibers may be used. The organic reinforcing fibers used in the invention may be classified as follows: high modulus reactive fibers, low modulus nonreactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

A side effect of adding recycled concrete aggregates to the construction material may be a reduction on the compressive strength of concrete. However, this can be resolved by correcting the amount of mixing water in the concrete mix: it was indeed found that recycled concrete aggregates are usually not dry and add water to the concrete composition. Proper correction of this corrects the water-cement ratio in the concrete composition, solving the issue of strength loss.

The effective water/cement ratio (wt/wt ratio) of the construction material used in the invention is preferably from 0.4 to 0.6, more preferably from 0.40 to 0.45. The water/binder ratio is defined as being the ratio by mass of the quantity of water to the dry mass of the hydraulic cement (Portland cement and mineral additions).

According to a second aspect, the invention refers to the use of a construction material comprising a hydraulic cement and aggregates for building structural and architectural components layer-by-layer, such as for 3D concrete or mortar printing, comprising placing the construction material through an outlet of the deposition head while moving the deposition head, in order to form a layer of construction material, wherein successive layers of construction materials are placed on top of each other, wherein the aggregates comprise recycled concrete aggregates.

The invention will now be explained with reference to the following examples of construction material compositions tested for 3D printing applications.

The concrete compositions are indicated in Table 1, wherein the following materials were used.
• Cement: CEM I 52.5 R from Le Teil
• Limestone filler: Omyacarb, provided by Omya
• Thickening agent: Mecellose Hiend 2001, provided by Lotte Fine Chemical
• Extrusion aide: Cimsil A-55, provided by Tolsa S.A.
• SP1 (Super-plasticizer): Optima 100, provided by Chryso
• SP2 (Super-plasticizer): MasterPol.300, provided by MBCC
• Sand1: Petite-craz 0/1
• Sand2: Petite-craz 1/5
• Gravel: Petite-craz 5/10
• RC sand 1: Recycled concrete sand 0/4 having the following characteristics:
∘ True density (kg/l): 1.86
∘ Wet density (kg/l): 2.17
∘ Absolute density (kg/l): 2.69
∘ Water absorption (%): 16.63
∘ Bulk density (kg/l): 1.072
∘ Compacity: 0.576
∘ Porosity: 0.424
• RC sand 2: Recycled concrete sand 0/2 having the following characteristics:
∘ True density (kg/l): 2.11
∘ Wet density (kg/l): 2.32
∘ Absolute density (kg/l): 2.68
∘ Water absorption (%): 10.03
∘ Bulk density (kg/l): 1.072
∘ Compacity: 0.613
∘ Porosity: 0.387
• RC gravel: Recycled concrete gravel 4/10 having the following characteristics:
∘ True density (kg/l): 2.24
∘ Wet density (kg/l): 2.39
∘ Absolute density (kg/l): 2.65
∘ Water absorption (%): 6.94
∘ Bulk density (kg/l): 1.240
∘ Compacity: 0.554
∘ Porosity: 0.446
• Fiber: Neuflex 6mm, provided by NEUVENDIS SPA

| | | | **Reference mix** | **Mix A-1** | **Mix A-2** | **Mix A-3** | **Mix A-4** | **Mix A-m** | **Mix B-1** | **Mix B-2** | **Mix B-m** | **Mix C** | **Mix D** | **Mix D** |
|---|---|---|---|---|---|---|---|---|---|---|---|---|---|---|
| **Raw material** | **Unit** | | | | | | | | | | | | | |
| Cement | kg/m3 concrete | | 404 | 404 | 411 | 411 | 404 | 404 | 404 | 404 | 404 | 412 | 405 | 418 |
| Limestone filler | kg/m3 concrete | | 98 | 98 | 100 | 100 | 98 | 98 | 98 | 98 | 98 | 100 | 98 | 106 |
| Effective water (free water) | L/m3 concrete | | 213 | 213 | 201 | 201 | 213 | 213 | 213 | 213 | 213 | 217 | 214 | 217 |
| air (theoretical) | % | | 2 | 2 | 2 | 2 | 2 | 2 | 2 | 2 | 2 | 2 | 2 | 2 |
| Thickening agent | wt.-% / cement | | 0.21 | 0 | 0 | 0 | 0.1 | 0.21 | 0 | 0 | 0.21 | 0 | 0 | 0 |
| Extrusion aide | wt.-% / cement | | 0.47 | 0.47 | 0.47 | 0.47 | 0.47 | 0.47 | 0.47 | 0.47 | 0.47 | 0.47 | 0.47 | 0.47 |
| SP1 | wt.-% / cement | | 0.22 | 0.22 | 0.22 | - | 0.12 | 0.22 | 0.22 | 0.12 | 0.22 | 0.22 | 0.22 | 0.22 |
| SP2 | wt.-% / cement | | - | - | | 0,4 | - | - | - | - | - | | | |
| Sand 1 | kg/m3 concrete | | 356 | 309 | 315 | 315 | 309 | 309 | 279 | 279 | 279 | 203 | 310 | 196 |
| Sand 2 | kg/m3 concrete | | 262 | 216 | 220 | 220 | 216 | 216 | 154 | 154 | 154 | 143 | 216 | 134 |
| Gravel | kg/m3 concrete | | 932 | 932 | 948 | 948 | 932 | 932 | 932 | 932 | 932 | 923 | 933 | 357 |
| RC sand 1 | kg/m3 concrete | | - | 96 | 99 | 99 | 96 | 96 | 193 | 193 | 193 | 277 | - | 282 |
| RC sand 2 | kg/m3 concrete | | - | - | - | | - | | - | - | | | 96 | - |
| RC gravel | kg/m3 concrete | | - | - | - | - | - | 96 | - | - | 193 | - | - | 585 |
| Fibre | kg/m3 concrete | | 0.461 | 0.461 | 0.469 | 0.469 | 0.461 | 0.461 | 0.461 | 0.461 | 0.461 | 0.462 | 0.462 | 0.476 |
| Yield strength | kPa | | | | | | | | | | | | | |
| | Minutes after mixing | 0 | 1.5 | 2.5 | 2.8 | 3.0 | 2.5 | 8.3 | 2.0 | 2.7 | 4.3 | 1.5 | 2.3 | 3.0 |
| | | 5 | 2.0 | 2.3 | 4.0 | 4.0 | 4.5 | 8.7 | 3.0 | 3 | 5.5 | 1.8 | 2.5 | 4.5 |
| | | 15 | 2.5 | 3 | 4.4 | 4.5 | 4.5 | 12.0 | 4.0 | 4 | 7.5 | 2.7 | 3.5 | 5.5 |
| | | 30 | 4.3 | 4.3 | 7.4 | 7.3 | 5.5 | n.m. | 5.2 | 4.5 | 10 | 3.3 | 4.2 | 7.5 |
| | | 45 | 4.8 | 5 | 6.5 | 11.0 | 9.0 | 12.3 | 6.3 | 9.4 | 10.5 | 5.0 | 5.0 | 9.5 |
| Buildability | cm | | 7.6 | 7.8 | 7.8 | 7.8 | 7.7 | 8.2 | 7.6 | 7.8 | 8.2 | 7.3 | 7.7 | 8.0 |
| 7-days strength | MPa | | 38.1 | 32.5 | 35.4 | n.m. | 32.8 | n.m. | 32.8 | 32.1 | n.m. | 28.6 | n.m. | n.m. |

| | | | | | | | | | | | | | | |
|---|---|---|---|---|---|---|---|---|---|---|---|---|---|---|
| n.m: not measured | | | | | | | | | | | | | | |

The reference composition is a concrete that is suitable for 3D printing comprising aggregates with a Dmax of 10mm and not comprising any recycled concrete aggregates. In order to improve the printability and in order to achieve a sufficient yield strength immediately after placing a layer of the concrete, the concrete composition contains a thickening agent.

Concrete compositions A-1, A-2, A-3, A-4, B-1, B-2, C, D and E comprise recycled concrete aggregates and are therefore examples that are considered to correspond to the instant invention. They show the benefits of incorporating recycled concrete aggregates into concrete for 3D printing, namely the reduction or elimination of a thickening agent.

In contrast, concrete compositions A-m and B-m comprise the same amount of thickening agent than the reference composition and are therefore less suitable, since their yield strength tends to be higher than would be optimal for the concrete to be printable.

The table above indicates the results of 3D-printing tests carried out with the concrete compositions with regard to yield strength, buildability and 7-days compressive strength. The yield stress was measured with a scissometer. A scissometer consists of a vane plunged into the material to be tested and to which an increasing torque is applied. When a failure occurs in the material, the vane starts to rotate, generally as the torque reaches its maximum value, which is considered as the characteristic value that is representative of the yield stress of the material.

7-days compressive strength was measured according to EN 196-1:2016. Buildability was measured according to the method described in this article: C. Zhang, Z. Hou, C. Chen, Y. Zhang, V. Mechtcherine, Z. Sun, Design of 3D printable concrete based on the relationship between flowability of cement paste and optimum aggregate content, Cem. Concr. Compos. 104 (2019) 103406, https://doi.org/10.1016/j.cemconcomp.2019.103406.

Comparing Mix A-1 with A-m (or Mix B-1 with Mix B-m), one can see that recycled concrete aggregate has a similar effect as a thickening agent to increase the yield strength of the placed construction material. This shows that the use of recycled concrete aggregate can replace thickening agents.

Mix A-2 is an improved mix, whose compressive strength is improved by reducing mixing water (the reduction of water corresponds to about the amount of water absorbed by the recycled concrete aggregate).

Mix A-3 is similar to A-2 except that a different superplasticizer is used.

Mix A-4, when compared with Mix A-1, has a reduced dosage of superplasticizer, but additionally contains a thickening agent.

Mix B-1, when compared with Mix A-1, has an increased dosage of recycled concrete aggregate.

With mix B-2, compared to Mix B-1, the only change is that the dosage of superplasticizer is reduced. This shows that the yield strength, especially 30 minutes after mixing, can be further boosted. In other words, the use of a superplasticizer can reduce the yield strength development, especially from 30 minutes after mixing and later.

Mix C, compared with Mix A-1 and Mix B-1, has a further increased dosage of recycled concrete aggregate.

With mix D, compared with Mix A-1, the only difference is that the recycled sand is from another supplier.

Mix E has the highest dosage of recycled aggregate, and not only recycled sand but also recycled gravel are incorporated in the mix.

The above concrete compositions do not require any addition of an admixture in the deposition head.

The invention may also be realized with a bi-component concrete system, in which construction material is conveyed to the deposition head, an admixture is added to and mixed into the construction material and the resulting final mixture is placed through an outlet of the deposition head. Preferably, the admixture is a setting accelerator. The following example illustrates an embodiment of a bi-component concrete system for 3D printing.

Component A (concrete formulation), component B (Floquat ASL provided by SNF Floerger, aluminum sulfate based) and the performance are indicated in the following table:

| | | Reference mix | Mix with demolition sand |
|---|---|---|---|
| Component A | Dry mortar | 633 kg | 626 kg |
| | 0/1 sand | 1219 kg | 609 kg |
| | Demolition sand | 0 | 531 kg |
| | Optima 100 | 9 kg | 13 kg |
| | Effective water | 238 L | 230 L |
| | water to Dry mortar ratio | 0.376 | 0.367 |
| Component B | Floquat | 34 | 33 |
| Performance | yield stress at 30 min | 20 | 28 |

The table above gives information on two bi-composition mixes: the reference without demolition sand and the mix with demolition sand. The mix with demolition sand has lower water content which explains a higher demand in Optima 100, but more importantly, with a slightly lower dosage of component B, it has significantly higher yield stress.

The dry mortar consists of 81.4% by weight of a hydraulic binder (Holcim Susteno produced in Switzerland), which comprises ground concrete demolition waste, and 18.5% by weight of a limestone filler.

The demolition sand is characterized by the following parameters:

| | | |
|---|---|---|
| Density (g/cm³) | 2.11 | |
| Water absorption | 10% | |
| Particle size (mm) | D10 | <0.063 |
| | D50 | 0.35 |
| | D90 | 1.5 |

The particle size of the sand is measured by sieving.

## Claims

1. A method of placing a flowable construction material comprising a hydraulic cement and aggregates for building structural and architectural components layer-by-layer, such as for 3D concrete or mortar printing, said method comprising:
conveying the flowable construction material to a deposition head,
placing the construction material through an outlet of the deposition head while moving the deposition head, in order to form a layer of construction material,
wherein successive layers of construction material are placed on top of each other,
wherein the aggregates comprise recycled concrete aggregates.

2. Method according to claim 1, wherein 10-50 wt.-% of the aggregates are comprised of recycled concrete aggregates.

3. Method according to claim 1 or 2, wherein recycled concrete aggregates comprise a fine fraction having a particle size of < 4mm and/or a coarse fraction having a particle size of 4-20mm.

4. Method according to claim 1, 2 or 3, wherein the recycled concrete aggregates have a water absorption of 5-25%, preferably 10-20%, measured according to NF EN 1097-6 dated 2022.

5. Method according to any one of claims 1 to 4, wherein the recycled concrete aggregates have an absolute density of 2.5-2.7 kg/dm³.

6. Method according to any one of claims 1 to 5, wherein the recycled concrete aggregates have a loose packing density of 0.48-0.65, measured according to EN 1097-3 dated 1998.

7. Method according to any one of claims 1 to 6, wherein the step of placing the construction material comprises extruding the construction material in a pasty form through a nozzle of the deposition head.

8. Method according to any one of claims 1 to 7, wherein after the placement of a first layer of construction material, at least one subsequent layer of construction material is placed onto the first layer, wherein the yield stress of the construction material is adjusted so that the first layer does not collapse under the load of said at least one subsequent layer.

9. Method according to any one of claims 1 to 8, wherein the yield stress of the freshly placed construction material is 300 - 3000 Pa, measured 30-60 sec. after its placement.

10. Method according to any one of claims 1 to 9, wherein the hydraulic cement comprises at least 30 wt.-% Portland clinker.

11. Method according to any one of claims 1 to 10, wherein the hydraulic cement comprises at least 10 wt.-% of a supplementary cementing material, preferably ground granulated blast-furnace slag.

12. Method according to any one of claims 1 to 11, wherein a water reducer, in particular a plasticizer or a superplasticizer, preferably a plasticizer based on polyoxy polycarboxylate or phosphonates, is added to or is present in the construction material before the conveying step, wherein the conveying of the construction material is performed by pumping.

13. Method according to any one of claims 1 to 12, wherein an admixture, preferably a setting accelerator and/or a thickening agent, is added to the construction material in the deposition head, namely after the step of conveying the flowable construction material to the deposition head and before the step of placing the construction material through an outlet of the deposition head.

14. Use of a construction material comprising a hydraulic cement and aggregates for building structural and architectural components layer-by-layer, such as for 3D concrete or mortar printing, comprising placing the construction material through an outlet of the deposition head while moving the deposition head, in order to form a layer of construction material, wherein successive layers of construction materials are placed on top of each other, wherein the aggregates comprise recycled concrete aggregates.
